# EUROPEAN PATENT APPLICATION

(11) **EP 2 090 547 A1**
(43) Date of publication of application: **19.08.2009**
(21) Application number: 08163805.8
(22) Date of filing: 05.09.2008
(51) Int. Cl.: C02F 1/28, C02F 3/10, C02F 3/34

(54) **Filling for biofillter for methane oxidation**

(30) Priority: 24.12.2007 PL 38415107
(71) Applicant: Politechnika Lubelska, 20-219 Lublin (PL)
(72) Inventor: Pawlowski, Lucjan, 20-027 Lublin (PL); Pawlowska, Malgorzata, 20-027 Lublin (PL)
(74) Representative: Kaminski, Piotr

(57) **Abstract**

The present invention relates to a filling for biofilter for methane oxidation. Biofilter is **characterised in that** it is made out of a mixture of peat and milled zeolite in the amount of zeolite of 3,0 - 5,0 % by weight. Invention allows for acceleration of the oxidation of methan to CO₂ by methanotrophic bacteria.

## Description

The present invention relates to a filling for biofilter for methane oxidation. Biogas emitted in the initial stage of waste fermentation in the waste disposal depot has sufficient caloric value and can be collected for energy purposes. However, when the CH₄ concentration drops below 30%, the use of biogas for energy purposes becomes unprofitable. Meanwhile, methane will be emitted from waste deposal depots for tens of years to come. It turned out that methane is one of the important greenhouse gases. CH₄ molecule absorbs the infrared radiation twenty times more then CO₂, the gas considered as the main factor responsible for climate warming.

Emission from waste disposal depots is one the important factors having influence on climate warming. So far known methods for removal of methane from layers covering entire waste disposal depots or from so-called "windows" relay on bio-oxidation of methane to carbon dioxide. Different types of filters with specially designed fillings are also used.

In order to increase efficiency of reaction of methane to carbon dioxide oxidation, in accordance with Chinese patent 101016512, a bed containing methane oxidising bacteria is divided into segments, each of which has an inlet port for air supply, which ensures uniform oxygen concentration. This solution considerably improved the ratio of methane to carbon dioxide oxidation.

In other solution according to Japanese patent 20072775022, on oxidising bed covering the waste disposal depot plant cultivation was introduced and the plants were used as carriers for bacteria oxidising methane to carbon dioxide. In the plant cover two parallel processes occur: methane to carbon dioxide oxidation and the use of carbon dioxide in photosynthesis.

In French patent 1526746 a filter bed was described to contain substances which activate biochemical oxidation of methane, in the following quantities: Na₂HPO₄ - 0,6; KH₂PO₄ - 0,4; MgSO₄ x 7H₂O - 0,2; NH₄Cl - 0,1 g/dm³ of bed. The bed also contained traces of Fe, Ca. Zn, Cu, Mn and Co. According to this patent such composite bed favoured the growth of methanotrophic bacteria and hence intensified the methane oxidation.

According to French patent 2016899 methane mixed with air was passed through a solution containing nutrients - (NH₄)₂SO₄ in concentration of 0,2 mgN/dm³ of solution - with suspended *Pseudomonas* bacteria. Methane was removed by inclusion in the biomass of organisms suspended in the solution.

Other solution was presented in Japanese patent 200055347. After removal of hydrogen sulphide by its oxidation to free sulphur, gas containing methane is contacted in two towers filled with the mixture of yeasts and methane oxidising bacteria, which leads to oxidation of methane to methanol. After filtration and recirculation of bacteria and yeast to absorption towers, the aqueous solution of methanol is distilled in order to obtain usable methanol.

A bed capable of methane oxidation and removal of odours coming from ruminant animal farms was described in Japanese patent 2007072848. The idea was to place the mixture of microorganisms *Bacillus, Lactobacillus, Streptococcus, Candida* and *Pichia* on the material obtained after palm oil pressing and to use such material as a filling of filter.

The present invention involves a filling for biofilter for methane oxidation which is made out of a mixture of peat and milled zeolite in the amount of zeolite of 3,0 - 5,0 % by weight.

Advantageous effect of this invention is that one obtains considerable acceleration of methane to CO₂ oxidation by methanotrophic bacteria

### Example

Studies showed that complete methane oxidation in the mixture of 7% CH₄ and 93% CO₂ occurs at the flow of gas through a bed of compost made of communal waste at the speed of 4,5 dm³ per m² per hour. After adding to the compost 4% of milled zeolite following by mixing, the filter efficiency increased by 40% and amounted to 6,3 dm³/m² per hour.

## Claims

1. Biofilter filling for methane oxidation **characterised in that** it is made out of a mixture of peat and milled zeolite in the amount of zeolite of 3,0 - 5,0 % by weight.
